# EUROPÄISCHE PATENTANMELDUNG

(11) **EP 0 947 427 A2**
(43) Veröffentlichungstag der Anmeldung: **06.10.1999**
(21) Anmeldenummer: 99106621.8
(22) Anmeldetag: 31.03.1999
(51) Int. Cl.: B65B 21/18

(54) **Verfahren zur Kommissionierung von nach oben offenen Behältern sowie Greifeinrichtung hierzu**

(30) Priorität: 31.03.1998 DE 19814365
(71) Anmelder: VOSTER HYDRODRIVE GMBH, 09114 CHEMNITZ (DE)
(72) Erfinder: Arndt, Jan, 09634 Siebenlehn (DE); Vorsteher, Paul, 09247 Röhrsdorf (DE)
(74) Vertreter: Alber, Norbert, Dipl.-Ing.

(57) **Zusammenfassung**

Die Erfindung betrifft ein Greifsystem für ein Behälter-Handlingsystem sowie ein Verfahren hierfür. Die Behälter auch stark unterschiedlicher Formate können zu Lagen auf Paletten oder in Stapeln nebeneinander stehend aufeinandergestellt oder wieder abgebaut werden. Die erfindungsgemäßen Verfahren kennzeichnet sich dadurch, daß eine Greifeinrichtung auf den zu greifenden Behälter abgesenkt wird, bis mehrere Greifelemente und Zentrierelemente von oben in das Innere des zu greifenden Behälters, zwischen die Behälterinnenwand und Gut, oder zwischen Innen- und Außenwand, soweit eintauchen, bis zwischen Behälteroberkante und der Greifeinrichtungsgrundplatte oder der diese ersetzenden Niederhalter ein geringer Abstand verbleibt. Daraufhin werden die Greif- und Zentrierelemente nach außen bewegt und mit dem Behälter in Eingriff gebracht, an die Greifeinrichtungsgrundplatte bzw. Niederhalter gezogen, angehoben und an den Zielort transportiert.

## Beschreibung

### 1. Zielstellung

Für ein Behälter-Handlingsystem (z. B. für Getränkeflaschen-Kästen) wurde ein Greifsystem entwickelt. Es handelt sich um einen Innengreifer, da die Behälter oben offen sind und meist direkt nebeneinander stehen. Der automatische Transport bzw. die Ein- und Auslagerung unterschiedlicher Waren in unterschiedlichen Behältern mit ähnlichen Grundflächen, dicht an dicht nebeneinander und übereinander gelagert, war durch das Handling mit demselben einfach aufgebauten Greifer zu ermöglichen.

Zum Greifen der verschiedenen Behälter ist kein gemeinsames Vielfaches zur Verwendung einfacher Greifmechanismen vorhanden. Die wenigen Gemeinsamkeiten der Behälter müssen für die Greifbarkeit genügen:
- Länge und Breite der Behälter, die jedoch etwas (um einige mm) variieren,
- in zumindest zwei gegenüberliegenden Seitenwänden - zumeist den Schmalseiten befinden sich im oberen Bereich mittig je ein Eingriff oder je zwei Eingriffe, die seitlich symmetrisch angeordnet sind, die jedoch in den verschiedenen Behältern unterschiedliche Breite und Höhe aufweisen. Die obere Kante dieser Eingriffe bilden Griffstege 16.
- Auch diese Griffstege weisen unterschiedliche Breite und Höhe auf,
- bei teilweise oder vollständig doppelwandigen Behältern befinden sich diese Griffstege zumindest in der äußeren Wandung und sind auch von oben, zwischen Innen- und Außenwand zugänglich,
- bei Behältern mit einfacher Wandung besteht zwischen den Griffstegen und dem Transportgut ein Mindestabstand - z. B. bei Flaschenkästen befinden sich in diesem Bereich nur die Flaschenhälse.

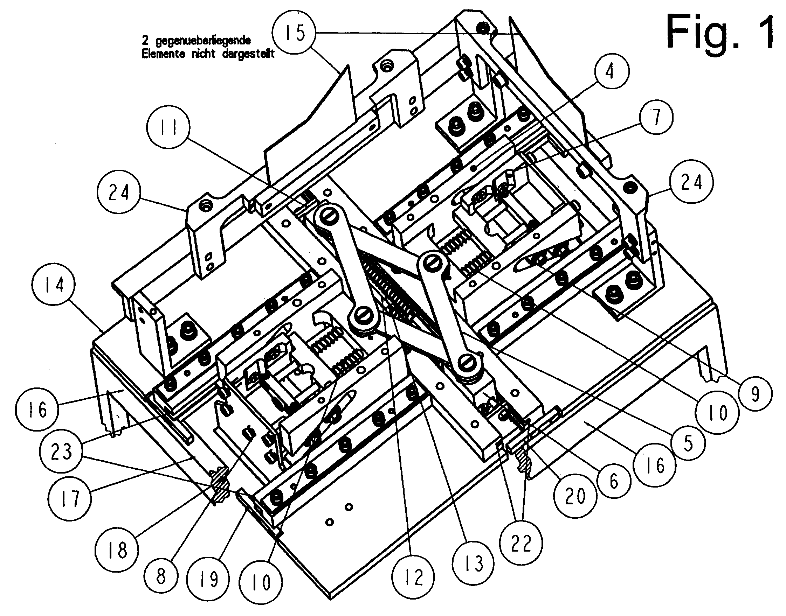

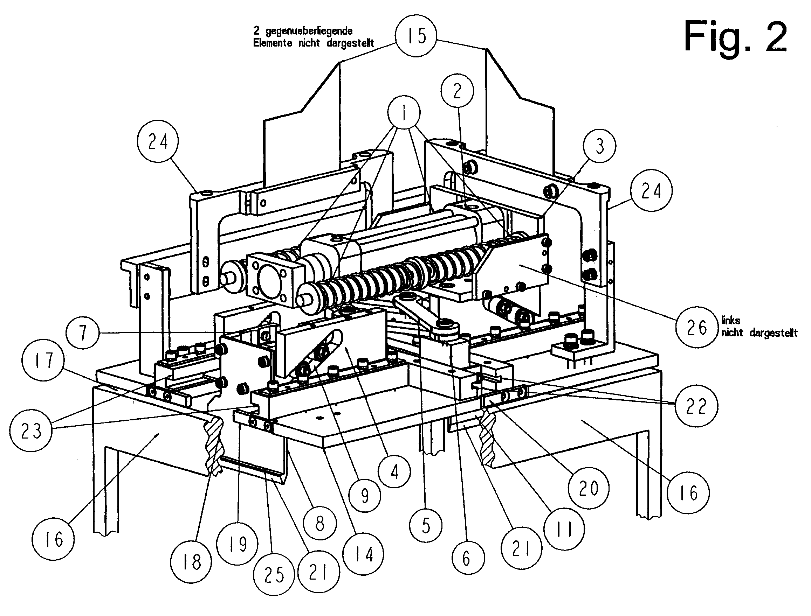

### 2. Grundsätzlicher Aufbau (Figs. 1 und 2)

Der Greifer besteht aus einer Grundplatte 14, worauf jeweils mittig vorzugsweise an den Schmalseiten zwei Schubkeilgetriebe 4, 7, 9 mit einem einzelnen, gemeinsamen, linearen Antrieb 2 (z. B. Pneumatik-, Hydraulikzylinder, Linearmotor, Spindelantrieb), der gegen vorgespannte Spiralfedern 1 wirkt, befestigt sind. Durch den konstruktiven Aufbau des Schubkeilgetriebes kann sowohl die lichte Innenweite des Kastens und damit die Griffstegstärke, als auch die Griffsteghöhe in gewissen Grenzen variieren. Bei der für den Prototyp gewählten Konstruktion kann - Getränkekästen entsprechend - die lichte Weite von 356 - 378 mm und die Griffsteghöhe um 5 mm variieren.

Der Antrieb der Seitenzentrierung 6 und 11 erfolgt über Koppelglieder (Schere, 5), die auch den Synchronlauf der Schubkeilgetriebe gewährleisten.

Der Hubwagen 7 des Schubkeilgetriebes trägt ein Hakenblech 8 zum Untergreifen des Griffstegs 16. Die Grundplatte ist mit Sensorik ausgerüstet, die sowohl Signale vor der Kastenaufnahme als auch für den Greifzustand meldet.

Zur Kompensierung von horizontalen Abweichungen zwischen Greifeinheit und zu greifendem Behälter befinden sich an den Hakenblechen 8 zum Untergreifen des Griffstegs 16, an den seitlichen Zentrierflächen 11 sowie an den inneren Oberkanten der Griffstege 16 der Behälter konische Einlochschrägen als zusätzliche Einfädelhilfe zu der oben dargelegten aktiven Zentrierung.

Um die bei horizontalen Abweichungen durch die Einlaufschrägen ausgelöste Horizontalbewegung durchführen zu können, besteht die z-Achse der Greifeinheit, die die senkrechte Bewegung der gesamten Greifeinheit ermöglicht, vorzugsweise aus vier Bandelementen, die aus Stahl, Kunststoff oder ähnlichen Materialien gefertigt sind und die die erforderliche flexible horizontale, aber pendelfreie Abweichung gewährleisten. Sie sind mit der Greifeinrichtung durch justierbare Befestigungsbügel 24 verbunden.

### 3. Funktionsbeschreibung

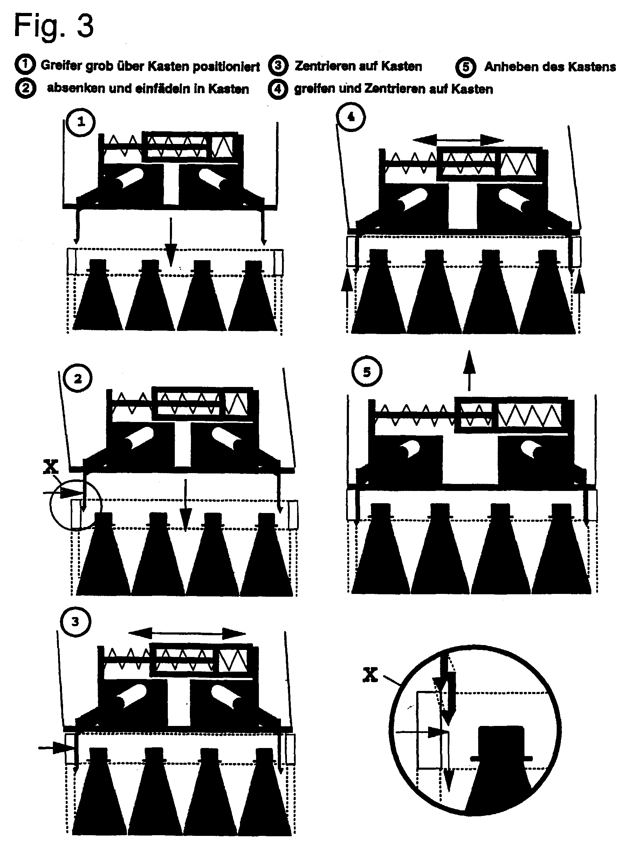

### 3a) Erste Variante (Fig. 3):

Der Greifer wird in seiner obersten Stellung durch ein x-y-Portalsystem über die Behälterposition gefahren. Er ist relativ elastisch an der z-Achse des Portalsystems mittels Bändern 15 vorzugsweise aus Stahl oder Kunststoff befestigt. In der obersten Stellung ist diese elastische Aufhängung durch mechanische Arretierung aufgehoben. Nur in dieser Stellung wird der Portalschlitten (z-Achse mit Greifer) in der x- und y-Achse verfahren. Durch synchrones Abwickeln der Bänder 15 wird die Greifeinrichtung auf die vom Lagerrechner ermittelte Höhe des aufzunehmenden Behälters (auf einem Stapel von Behältern oder auf einer der Lagen einer Palette) abgesenkt.

### Aufnahme des Behälters:

Der vorzugsweise pneumatische Arbeitszylinder 2 ist gegen die Federkraft der Druckfedern 1 eingefahren. Damit sind die Hakenbleche 8 in ihrer tiefsten und im Abstand zueinander geringsten Endlage ( 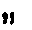 Greifer offen"). Die Seitenzentrierbleche 11 sind ebenfalls in ihrer im Abstand zueinander geringsten Endlage ( 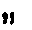 Greifer offen"). Somit ist gewährleistet, daß die Haken- und Seitenzentrierbleche in die lichte Öffnung des Behälters von oben eintauchen können. Die Lage dieser Bleche ist so festgelegt, daß beim Eintauchen in die kleinste lichte Öffnung (abhängig vom Behältertyp) das Minimalspiel zwischen Behälterinnenflächen 18 und Transportgut von einigen Millimeter nicht unterschritten wird (Figur 3, Bild 1).

Durch Absenken der z-Achse bewegt sich die Greifergrundplatte 14 in Richtung Behälterdeckfläche 17. Dabei tauchen die Haken- 8 und Seitenzentrierbleche 11 in den Freiraum zwischen oberem Behälterprofil (Griffsteg) und Transportgut (Flaschenhälsen) ein. Sie besitzen Einlaufschrägen 25, so daß bei einer größeren Abweichung als einige Millimeter (abhängig vom Behältertyp) zwischen der durch die x- und y-Achse des Portalsystems angefahrenen Position des Greifers und dem zu greifenden Behälter durch die relativ elastische Greiferbefestigung trotzdem ein Eintauchen ohne Kollision und ohne Nachpositionierung durch die x-und y-Achse ermöglicht wird (Figur 3, Bild 2).

Die Sensorik schaltet den z-Antrieb in der Abwärtsbewegung des Greifers ab, wenn sich die Greifergrundplatte 14 einige mm über der Behälterdeckfläche 17 befindet. Der Greifer schwebt in Greiferstellung 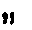 offen" über dem Behälter, die Haken- und die Seitenzentrierbleche sind, wie oben beschrieben, bereits "eingetaucht".

Kommt es während der Abwärtsbewegung in einem bestimmten Bereich nicht zu diesem Sensorsignal, liegt ein Fehlerzustand vor. Fehlerbehebung: nochmaliges Anfahren.

In dieser Stellung werden die Schubkeilgetriebe durch die Druckfedern 1 und mit eventueller Unterstützung durch die Kolbenstangenkraft des Arbeitszylinders 2 über die Verbindungselemente 26 nach außen gedrückt. Hubkeil 4 und Hubwagen 7 laufen bis zur Anlage an der Innenfläche des Griffstegs 18 infolge der Belastung durch die Federn 10 synchron. Diese Bewegung wird durch die Koppelstangen (Schere, 5) auf die Seitenzentrierbleche 11 übertragen. Sie sind am Übertragungsglied 6 durch Federn 13 abgestützt.

Sobald die Hakenbleche 8 bzw. die Zentrierbleche 11 an der Behälterinnenfläche 18 zur Anlage kommen, wird der Greifer durch die Federkraft der Seitenzentrierbleche 11 bzw. durch den Synchronlauf der Hubkeile 4 auf den Behälter bezogen ausgerichtet (zentriert). Hierbei wird die während des oben beschriebenen Einfädel- und Zentriervorgangs eventuell eingetretene horizontale Abweichung der Greifeinrichtung gegenüber der lotrechten Aufhängung des Greifers- dem Antrieb der z-Achse - durch eine flexible aber pendelfreie Abhängung an geeignet angeordneten (T-, H-, Doppel-T-, Dreiecks-, Vierecks-, Vielecks-Anordnung) Bändern 15 aus Stahlblech, Kunststoff oder anderem geeigneten Bandmaterial, ohne horizontale Nachjustierung der z-Achse, kompensiert (Figur 3, Bild 3+4).

Ab der Anlage der Hakenbleche 8 und der Zentrierbleche 11 an der Kasteninnenfläche 18 wird aus der Horizontalbewegung des Hubwagens 7 eine Vertikalbewegung. Die unter den Griffstegen 16 befindlichen Aufnahmeflächen 25 der Hakenbleche 8 ziehen dadurch den Behälter an die Greifergrundplatte 14. Liegt der Behälter an, wird über die Sensorik die eventuell genutzte Kolbenstangen-kraftunterstützung abgeschaltet und das Signal 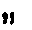 Greifer gegriffen" gebildet. Damit kann der Behälter durch die z-Achse in die oberste Stellung 2 angehoben und anschließend in der x- und y-Achse verfahren werden.

Die Kraft der Druckfedern 1 zwischen den Schubkeilgetrieben gewährleistet auch bei Energieausfall die Beibehaltung des Greifzustands. Der Hub- bzw. vertikale Transport des Behälters wird wieder durch synchrones Aufwickeln der Bänder 15 der z-Achse realisiert.

Falls sich beim Greifen die Hakenbleche 8 nicht am Griffsteg 16 abstützen bzw. sich bei der anschließenden Vertikalbewegung (Behälter an die Grundplatte ziehen) kein Widerstand ausbildet, werden die Hubkeile 7 mit den Hakenblechen 8 und die Seitenzentrierbleche 11 maximal bis an die Endanschläge 19, 20 auseinander gedrückt. In dieser Stellung signalisiert ein Sensor 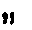 Behälter nicht gegriffen" bzw. 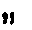 Behälter entspricht nicht den für den Greifer zugelassenen Abmessungen". Dieser Behälter und der eventuell darunter befindliche Stapel werden vom Lagerrechner, bis zur erforderlichen manuellen Behebung, als "nicht greifbar'' ausgesondert.

### Ablage des Behälters:

Das Portalsystem (x- und y-Achse) fährt die z-Achse mit einem gegriffenen Behälter über eine vorbestimmte Sollposition. Durch synchrones Abwickeln der Bänder 15 wird die Greifeinrichtung und mit ihr der Behälter auf eine vorbestimmte Ablagehöhe abgesenkt, die vorzugsweise einige Millimeter über der Abstellfläche liegt` damit die Bänder nicht entspannt werden. Die beim Anfahren des Greifers auf die vorbestimmte Ablageposition eintretende horizontale Abweichung zwischen dieser Ablageposition oder den Einrastkanten des obersten Behälters in dem anzufahrenden Behälterstapel und der lotrechten Aufhängung der Greifeinrichtung in der z-Achse werden durch Einlaufschrägen im Bodenbereich des gegriffenen Behälters und im Aufnahmebereich des darunterstehenden Behälters oder entsprechendes Spiel zwischen dem unteren und oberen Aufnahmebereich der Behälter ausgeglichen. Diese horizontale Anpassung ohne Nachpositionierung durch die x- und y-Achse des Portalsystems wird durch die oben beschriebene flexible aber pendelfreie Abhängung der Greifeinrichtung ermöglicht.

Der vorzugsweise pneumatische Antrieb 2 zieht gegen die Kraft der Druckfedern 1 die Schubkeilgetriebe 4, 7, 9 und damit auch die Hakenbleche 8 und über die Koppelglieder 5 die Seitenzentrierbleche 11 in ihre Ausgangslage. Dabei senken sich zuerst die Hakenbleche 8 (vorzugsweise mit dem Behälter), bei der anschließenden Horizontalbewegung der Hakenbleche 8 geben diese den Behälter frei und tauchen wieder in den Freiraum zwischen Behälterinnenflächen 18 und Transportgut (Flaschenhals) ein. In der dann wieder erreichten Ausgangslage wird durch einen Sensor das Signal 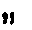 Greifer geöffnet" gebildet. Die z-Achse kann mit dem Greifer in ihre oberste Stellung gefahren werden.

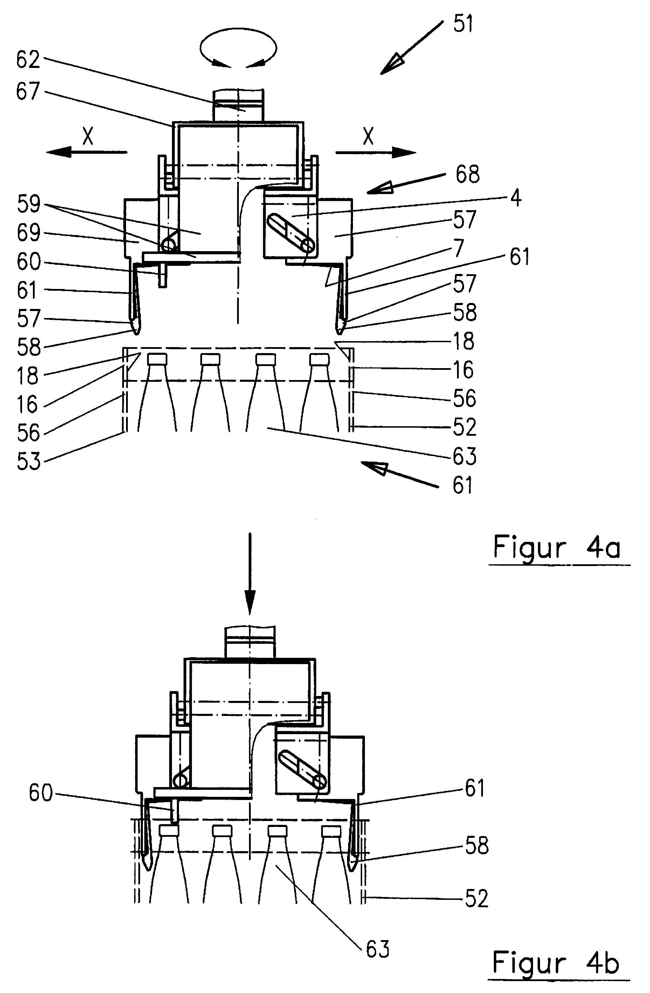

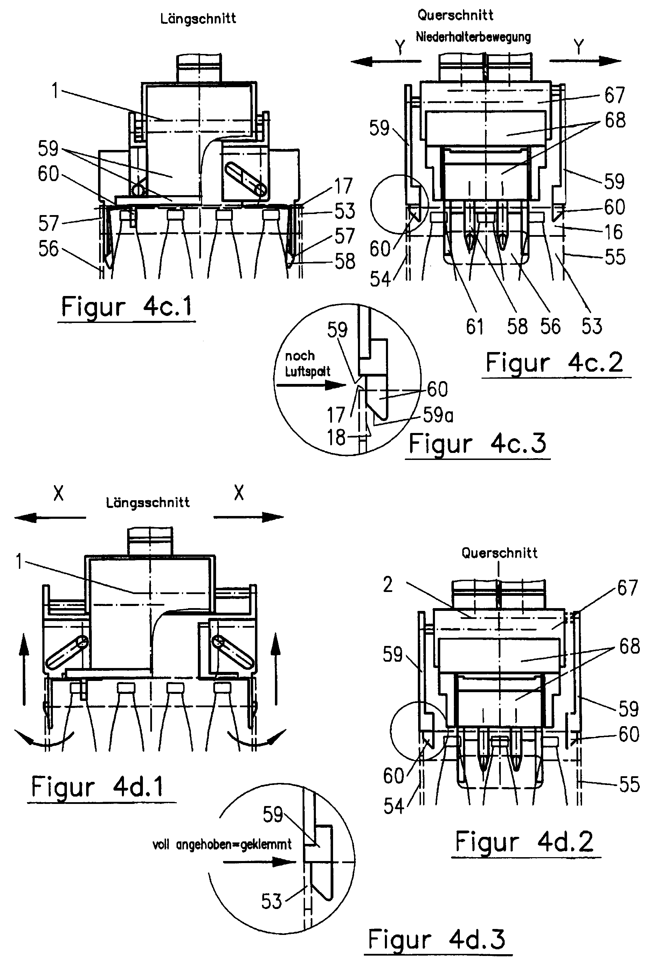

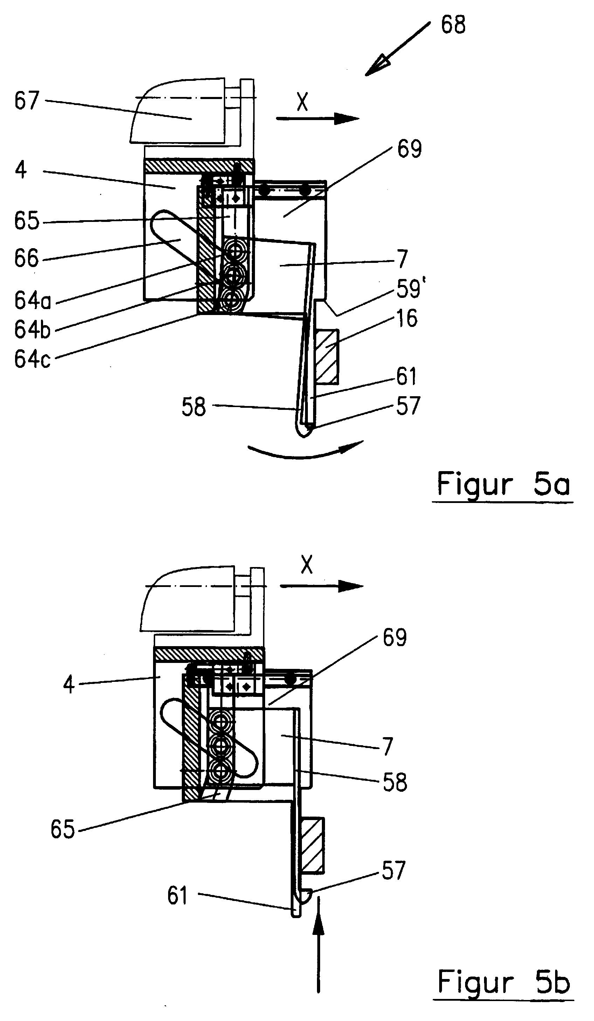

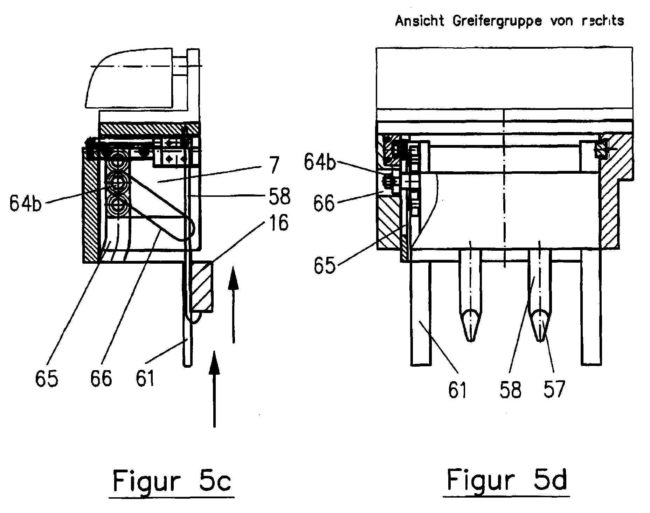

### 3b) Zweite Variante (Fig. 4 und 5):

Eine demgegenüber abgewandelte Vorgehensweise, die ermöglicht, verschiedenste Kastenformate zu greifen, zeigen die Figuren 4 und 5:

Fig. 4a zeigt die Greifeinrichtung 51 im teilweisen vertikalen Längsschnitt bei der Grobpositionierung. Dabei wird die Greifeinrichtung 51, die unter der Dreheinheit 62 befestigt ist, gegenüber dieser Dreheinheit 62 um die vertikale Achse so gedreht, daß die einander gegenüberliegenden Greifhaken 58 sich etwa oberhalb derjenigen Seitenwände 52, 53 der Getränkekiste 50 (die hier beispielhaft für einen Behälter dargestellt ist) befinden, welche in ihrem oberen Bereich den Griffsteg 16 und darunter den Durchbruch 56 aufweisen. Zusätzlich wird der Abstand in horizontaler X-Richtung sowohl der Greifhaken 58 als auch der ebenfalls nach unten weisenden X-Zentrierelemente 61, welche zueinander in Y-Richtung versetzt sind, wie besser in Fig. 4c.2 ersichtlich ist, so eingestellt, daß sich diese jeweils knapp innerhalb der Griffsteginnenseiten 18 befinden.

Dieser Relativabstand wird eingestellt durch Querverschiebung der beiden ganzen Greifergruppen 68 vorzugsweise bezüglich eines Greifergrundkörpers 67 der Greifeinrichtung 51. Die mechanischen Einzelheiten werden nachfolgend anhand der Figuren 5 noch erläutert werden.

Dabei umfaßt eine Greifergruppe 68 - wie am besten in den Figuren 5 zu erkennen, die jeweils eine solche Greifergruppe 68 zeigt - einen Hubkeil 4, einen Hubwagen 7 und eine X-Basis 69, die gemeinsam ein zweistufiges Schubkeilgetriebe bilden.

Die Greifhaken 58 sind dabei leicht schräg gestellt, so daß sie von oben aus leicht nach unten innen weisen, jeweils um einen Winkel von wenigen Grad, so daß die nach außen gerichteten Greifvorsprünge 57 der Greifhaken 58 nicht über die Außenkanten der X-Zentrierelemente 61 vorstehen.

Ebenso sind die quer zu den Greifhaken 58 an den beiden anderen Längsseiten des Greifergrundkörpers 67 vorhandenen, nach unten weisenden Y-Zentrierelemente 60, die beispielsweise in Fig. 4c.2 zu erkennen sind, ebenfalls in ihrem Relativabstand, in horizontaler Y-Richtung, zueinander so eingestellt, daß sie sich knapp innerhalb der Innenseiten der beiden anderen Seitenwände 54, 55 befinden.

Anschließend erfolgt - wie in Fig. 4b ersichtlich - das Absenken der Greifeinrichtung 51 in Z-Richtung vertikal nach unten, wobei die X-Zentrierelemente 61, die Greifhaken 58 und die Y-Zentrierelemente 60 jeweils zwischen die Innenseite der jeweiligen Seitenwand und die äußersten Flaschen 63 soweit eintauchen, bis - siehe Figuren 4c - einerseits die Greifvorsprünge 57 der Greifhaken 58 unterhalb des Griffsteges 16, also im Bereich des Durchbruches 56, liegen und andererseits die am besten in Fig. 4c.3 zu erkennende, nach unten weisende Anlagefläche des Niederhalters 59 noch nicht die Behälteroberkante 17 erreicht hat. Für das Einfädeln beim Eintauchen sind die am Y-Zentrierelement 60 zu erkennenden nach außen weisenden Einlaufschrägen und die analogen Einlaufschrägen an den Greifhaken 58 hilfreich.

Wie der Querschnitt der Fig. 4c.2 zeigt, befinden sich entlang der den Griffsteg 16 aufweisenden Seitenwand 53 zwei Greifhaken 58, die Teil des Hubwagens 7 sind, beabstandet nebeneinander, und zusätzlich - wiederum gegenüber den Greifhaken 58 beabstandet und zwar nach außen versetzt - zwei stabförmig ebenfalls vertikal nach unten weisende X-Zentrierelemente 61, die Teil der X-Basis 69 sind.

Wie die Figuren 4a, 4b, 4c.1 zeigen, werden der Relativabstand in X-Richtung der Greifhaken 58 und der X-Zentrierelemente 61 durch einen quer verlaufenden, linearen Antrieb 1 synchron bezüglich der Greifeinrichtung 51 und des Greifergrundkörpers 67 verändert, und ebenso der Relativabstand in Y-Richtung der Niederhalter 59 und deren Zentrierelemente 60, über einen zweiten linearen Antrieb 2, wie in Fig. 4c.3 und 4d.2 zu erkennen.

Der Antrieb 1 und insbesondere auch der Antrieb 2 sind dabei selbsthemmend ausgeführt.

Nach dem in den Figuren 4c dargestellten Eintauchen erfolgt die Zentrierung der Greifeinrichtung 51 gegenüber der Getränkekiste 50 gemäß den Figuren 4d:
- Die Zentrierung in X-Richtung ist in Fig. 4d.1 dargestellt, und in vergrößerter Detaildarstellung nochmals in den Figuren 5a - 5c. Dabei werden einerseits die Greifergruppen 68 mit den X-Zentrierelementen 61 der beiden einander gegenüberliegenden Seiten der Greifeinrichtung 51 horizontal auseinander bewegt, so daß sie an den Innenseiten der Griffstege 16 anliegen. Ferner werden die Greifhaken 58 um ihre horizontal in Y-Richtung verlaufende Schwenkachse so verschwenkt, daß die nach außen vorstehenden Greifvorsprünge 57 unterhalb des Griffsteges 16 positioniert werden. Die Greifhaken 58 stehen dann senkrecht.

Wie die Figuren 5 zeigen, werden hierfür auf jeder Seite der Greifeinrichtung drei grundsätzliche Bauteile, nämlich die X-Basis 69, der Hubwagen 7 und der Hubkeil 4, relativ zueinander bewegt: Gegenüber des - in den Figuren 5 aus Übersichtlichkeitsgründen nur teilweise dargestellten - Greifergrundkörper 67 der Greifeinrichtung 51 kann die X-Basis 69, von welcher die stabförmigen X-Zentrierelemente 61 nach unten ragen, in X-Richtung verschoben werden.

Ein Hubwagen 7, an dem die nach unten ragenden Greifhaken 58 mit ihren Greifvorsprüngen 57 fest angeordnet sind, ist gegenüber der X-Basis entlang eines vorgegebenen, im wesentlichen vertikalen Pfades verfahrbar, indem an dem Hubwagen 7 drei Führungsrollen 64a, 64b, 64c, die jeweils drehbar um horizontale Achsen sind, angeordnet sind, wovon zwei Führungsrollen 64a, 64c in einer Nut 65 der X-Basis 69 laufen. Diese Nut 65 ist in ihrem oberen Bereich vertikal ausgebildet, und an ihrem unteren Ende leicht schräg zur Mitte der Greifeinrichtung 51 hin gerichtet. Wenn also die untere Führungsrolle 64c diesen unteren Teil erreicht, steht dadurch der Hubwagen 7 nicht mehr horizontal und somit der daran befestigte Greifhaken 58 nicht mehr vertikal, sondern der Greifhaken 58 ist ebenfalls schräg nach unten innen weisend gestellt. Dadurch wird erreicht, daß der Greifvorsprung 57 nach außen nicht mehr über die X-Zentrierelemente 61 vorsteht, was vor allem beim Ausfahren der Greifeinrichtung 51 nach oben, also nach dem Absetzen einer Getränkekiste 50, von Bedeutung ist, um ein Hängenbleiben am Griffsteg 16 zu vermeiden.

Die dritte, z. B. mittlere, Führungsrolle 64b des Hubwagens 7 läuft dagegen in einer Schrägnut 66, die etwa im 45°-Winkel von außen unten nach innen oben der Greifeinrichtung ansteigend in einem Hubkeil 4 eingearbeitet ist, welcher ebenfalls bezüglich der Greifeinrichtung 51, insbesondere bezüglich deren Greifergrundkörper 67, in X-Richtung verlagerbar ist.

Wie der Übergang von Fig. 5a nach Fig. 5b zeigt, wird - nachdem die X-Basis 69 sich bereits soweit außen befindet, daß sich ihre X-Zentrierelemente 61 an dem Steg 16 anliegen - der Hubkeil 4 bezüglich dem Rest der Greifergruppe 68 ebenfalls horizontal nach außen in X-Richtung bewegt, und somit auch relativ zur X-Basis 69. Die Führungsrolle 64b läuft dadurch relativ entlang der Schrägnut 66 nach oben, wodurch einerseits die beiden anderen Führungsrollen 64a und 64c den vertikalen Teil der anderen Nut 65 erreichen, und somit die Greifhaken 58 vertikal gestellt werden, und andererseits diese Greifhaken 58 auch nach oben bewegt werden, bis zunächst die Greifvorsprünge 57 an der Unterseite des Griffsteges 16 anliegen und weiter, indem diese Greifvorsprünge 57 den Griffsteg 16 und damit den Getränkekasten 50 hochheben, bis - wie in Fig. 4d.2 und im Detail in Fig. 4d.3 dargestellt - die Oberkante der Seitenwände 54, 55 des Getränkekastens 50 gegen die nach unten weisende Anschlagfläche der Niederhalter 59 an den Y-Zentrierelementen 60 gepreßt wird. In dieser Einstellung liegt die Führungsrolle 64b etwa am oberen Ende der Schrägnut 66 an. Die Greifeinrichtung 51 kann nun zusammen mit dem fest und spielfrei damit verbundenen Getränkekasten 50 in Z-Richtung vertikal nach oben angehoben werden, wie Fig. 4e zeigt.

In Fig. 5a ist ferner zu erkennen, daR als Niederhalter 59' auch eine nach unten gerichtete Anschlagfläche an der X-Basis statt oder ergänzend zum Niederhalter 59 am Y-Zentrierelement 60 fungieren kann.

### BEZUGSZEICHENLISTE

- 1: linearer Antrieb
- 2: linearer Antrieb
- 4: Hubkeil
- 5: Koppelglied
- 6: Gleitstück
- 7: Hubwagen
- 8: Hakenblech
- 9: Lauffläche
- 10: Spiralfeder
- 11: Zentrierblech
- 12: Welle
- 13: Spiralfeder
- 14: Grundplatte
- 15: Band
- 16: Griffsteg
- 17: Behälteroberkante
- 18: Griffsteginnenseite
- 19: Endanschlag
- 20: Endanschlag
- 21: Einlaufschräge
- 22: Führung
- 23: Führung
- 25: Aufnahmefläche
- 26: Verbindungselemente
- 27: Greifvorsprünge
- 50: Getränkekasten
- 51: Greifeinrichtung
- 52: Seitenwand
- 53: Seitenwand
- 54: Seitenwand
- 55: Seitenwand
- 56: Durchbruch
- 57: Greifvorsprung
- 58: Greifhaken
- 59: Niederhalter
- 60: Y-Zentrierelemente
- 61: X-Zentrierelemente
- 62: Dreheinheit
- 63: Flasche
- 64a, 64b, 64c: Führungsrollen
- 65: Nut
- 66: Schrägnut
- 67: Grundkörper
- 68: Greifergruppe
- 69: X-Basis

## Patentansprüche

1. Verfahren zum Handhaben von eng nebeneinander und/oder übereinander stehenden Behältern, mittels einer Greifeinrichtung (51), wobei
- die Behälter oben offen sind, eine rechteckige Grundfläche und vier Seitenwände (52 - 55) aufweisen und in wenigstens zwei einander gegenüberliegenden Seitenwänden (52, 53) zu Griffzwecken wenigstens je ein Durchbruch (56) vorhanden ist, so daß der oberhalb des Durchbruches verlaufende Teil der Seitenwand (52) bzw. (53) einen Griffsteg (16) bildet, insbesondere daß die Behälter Getränkekisten (50) sind,
**dadurch gekennzeichnet**, **daß**
- die Greifeinrichtung (51) vertikal (Z-Richtung) verlagerbar ist und auf zwei einander gegenüberliegenden Seiten wenigstens je einen vertikal nach unten abragenden Greifhaken (58) mit horizontal (X-Richtung) nach außen vorstehendem Greifvorsprung (57) umfaßt,
- die Greifvorsprünge (57) in ihrem gegenseitigen Abstand in X-Richtung veränderbar und in ihrem Z-Abstand zur Greifeinrichtung (51) und insbesondere zu deren Niederhalter (59) veränderbar ist,
- die Greifeinrichtung (51) in den beiden horizontalen Richtungen (X und Y-Richtung) wirksame X-Zentrierelemente (61) und Y-Zentrierelemente (60) zum Zentrieren der Greifeinrichtung (51) gegenüber dem Behälter aufweist,
wobei das Verfahren wenigstens folgende vollautomatisch ablaufende Schritte insbesondere in dieser Reihenfolge beim Ergreifen und Anheben eines Behälters umfaßt, die bei Absetzen des Behälters umgekehrt ablaufen:
a) Grobpositionierung der Greifeinrichtung (51) in X-Y-Richtung über dem Behälter,
b) Absenken der Greifeinrichtung (51) in Z-Richtung, so daß
- die Greifeinrichtung (51) zwischen den Innenseiten derjenigen Seitenwände (52, 53) des Behälters, die die Griffstege (16) aufweisen und dem Inhalt des Behälters eintauchen, bis die Greifvorsprünge (57) sich im Höhenbereich der Griff-Durchbrüche (56) befinden, und
- die Absenkung nur soweit erfolgt, daß der Niederhalter (59, 59') noch oberhalb der Behälteroberkante (17) steht und diese noch nicht kontaktiert,
c) Zentrieren der Greifeinrichtung (51) in X- und Y-Richtung bezüglich des Behälters,
d) Verlagern der Greifvorsprünge (57) unter die Griffstege (16), und
e) Verlagern der Greifvorsprünge (57) in Z-Richtung bezüglich des Niederhalters (59, 59') der Greifeinrichtung (51), bis die Behälteroberkante (17) gegen die Unterseite des Niederhalters (59) gedrückt wird, und
f) Anheben der Greifeinrichtung (51) in Z-Richtung zusammen mit dem Behälter.

2. Verfahren nach Anspruch 1,
**dadurch gekennzeichnet**, **daß**
vor dem Absenken der Greifeinrichtung (51) der Abstand der Greifhaken (58) und/oder deren Greifvorsprünge (57) sowie der Abstand der in den Behälter eintauchenden Y-Zentrierelemente sowie ggf. vorhandener X-Zentrierelemente jeweils auf den richtigen Abstand in horizontaler Richtung zueinander entsprechend den Abmessungen des zu handhabenden Behälters gebracht wird.

3. Verfahren nach einem der vorhergehenden Ansprüche,
**dadurch gekennzeichnet**, **daß**
vor dem Absenken der Greifeinrichtung (51) durch Drehung um insbesondere 90° um eine vertikale Achse die Positionierung der Greifhaken (58) an den den Griffsteg (16) aufweisenden Seitenwänden (52, 53) bewirkt wird.

4. Verfahren nach einem der vorhergehenden Ansprüche,
**dadurch gekennzeichnet**, **daß**
die Greifvorsprünge (57) unter die Griffstege (16) hinein verlagert werden, indem die Greifvorsprünge (57), insbesondere zusammen mit dem gesamten Greifhaken (58) bezüglich der Greifeinrichtung (51) um eine horizontale Schwenkachse verschwenkbar sind, und insbesondere das Verlagern der Greifvorsprünge (57) unter die Griffstege (16) hinein und das Zentrieren der Greifeinrichtung in X-Richtung bezüglich des Behälters durch horizontales Auseinanderfahren der vertikalen Greifhaken (58) bzw. der Zentrierelemente mit den Greifvorsprüngen (57) in X-Richtung geschieht.
(Fig.1-3:)

5. Verfahren nach einem der vorhergehenden Ansprüche,
**dadurch gekennzeichnet**, **daß**
eine Greifeinrichtung von oben auf den zu greifenden Behälter abgesenkt wird, bis zwei oder mehrere Greifelemente (Hakenbleche 8) und zwei oder mehrere Zentrierelemente (Zentrierbleche 11) von oben in das Innere des zu greifenden Behälters, zwischen die Behälterinnenwand (18) und dem im Behälter befindlichen Gut, oder - bei ganz oder teilweise doppelwandigen Behältern - zwischen Innen- und Außenwand, soweit eintauchen, bis zwischen Behälteroberkante (17) und einer Greifeinrichtungsgrundplatte (14), die als Niderhalter fungiert, ein nur geringer Abstand verbleibt. Daraufhin werden die Greif- und Zentrierelemente nach außen bewegt und mit dem Behälter in Eingriff gebracht. Dann wird dieser an die Greifeinrichtungsgrundplatte (14) gezogen, danach angehoben und an den Zielort transportiert.

6. Verfahren nach einem der vorhergehenden Ansprüche,
**dadurch gekennzeichnet**, **daß**
der Bewegungsablauf der synchron/symmetrisch gekoppelten, doppelten Schubkeilgetriebe vom Zustand 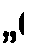 offen" zum Zustand 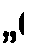 gegriffen" wie folgt verläuft:
a) gemeinsame horizontale Bewegung von Hubkeil (4) und Hubwagen (7), wobei der Hubwagen (7) durch die vorgespannten Spiralfedern (10) zum Hubkeil (4) in einer definierten Position gehalten wird, um das am Hubwagen (4) befestigte Hakenblech(8) sicher und reproduzierbar zunächst an einer der beiden Griffsteginnenseiten (18) zur Anlage zu bringen,
b) durch Fortsetzung der gleichen horizontalen Bewegung, Anlage beider Hakenbleche (8) an den Griffsteginnenseiten (18),
c) nach Anschlag der Hakenbleche (8) an den Griffsteginnenseiten (18) werden durch weitere horizontale Bewegung der Hubkeile (4) die vorgespannten Spiralfedern (10) weiter gespannt, daraus resultiert eine Relativbewegung zwischen den Hubkeilen (4) und den Hubwagen (7), welche über die schrägen Laufflächen (9) der Hubkeile (4) in eine Vertikalbewegung der Hubwagen (7) mit den an diesen befestigten Hakenblechen (8) umgewandelt wird, bis diese an der Unterseite der Griffstege (16) zur Anlage gebracht sind,
e) nach Anschlag der Hakenbleche (8) an den Griffstegunterseiten (16) und weiterer horizontaler Bewegung der Hubkeile (4), wird der im Anspruch 5 beschriebene geringe Abstand zwischen Greifeinrichtungsgrundplatte (14) und Griffstegoberkante (17) mit Federkraft der vorgespannten Spiralfedern (1) beseitigt bzw.diese beiden Teile auf Anschlag gebracht.
Durch die mechanische Kopplung der beiden Schubkeilgetriebe (Hubkeil [4] , Hubwagen [7]) mittels der Koppelglieder (5) und durch die Führungen (22, 23), wird ein zwangläufiges Getriebe gebildet. Dadurch erfolgt der oben beschriebene Greifvorgang symmetrisch und synchron auf die beiden gegenüberliegenden Greifeinrichtungsseiten.

7. Greifeinrichtung, insbesondere zur Durchführung des Verfahrens nach einem der vorhergehenden Ansprüche, zum Handhaben von eng nebeneinander stehenden Behältern, mittels einer Greifeinrichtung (51), wobei
- die Behälter oben offen sind, eine rechteckige Grundfläche und vier Seitenwände (52 - 55) aufweisen und in wenigstens zwei einander gegenüberliegenden Seitenwänden (52, 53) zu Griffzwecken wenigstens je ein Durchbruch (56) vorhanden ist, so daß der oberhalb des Durchbruches verlaufende Teil der Seitenwand (52) bzw. (53) einen Griffsteg (16) bildet, insbesondere daß die Behälter Getränkekisten (50) sind,
**dadurch gekennzeichnet**, **daß**
- die Greifeinrichtung (51) vertikal (Z-Richtung) verlagerbar ist und auf zwei einander gegenüberliegenden Seiten wenigstens je einen vertikal nach unten abragenden Greifhaken (58) mit horizontal (X-Richtung) nach außen vorstehendem Greifvorsprung (57) umfaßt,
- die Greifvorsprünge (57) in ihrem gegenseitigen Abstand in X-Richtung veränderbar und in ihrem Z-Abstand zur Greifeinrichtung (51) und insbesondere zu deren Niederhalter (59,59') veränderbar ist,
- die Greifeinrichtung (51) in den beiden horizontalen Richtungen (X und Y-Richtung) wirksame X-Zentrierelemente (61) und Y-Zentrierelemente (60) zum Zentrieren der Greifeinrichtung (51) gegenüber dem Behälter aufweist, und
- wenigstens der die Greifvorsprünge (57) bewegende Antrieb (2) so gestaltet ist, daß auch bei Ausfall der Energieversorgung dieses Antriebes (2) die Greifvorsprünge (57) in der bei Ausfall der Energiebversorgung befindlichen Position verbleiben.

8. Greifeinrichtung nach Anspruch 7,
**dadurch gekennzeichnet**, **daß**
die Greifeinrichtung gegenüber einer über der Greifeinrichtung (51) angeordneten Dreheinheit (62) um eine vertikale Achse um mindestens 90° verschwenkbar ist, und
- insbesondere der Niederhalter (59) an den X-Zentrierelementen (61) ausgebildet ist, sowie
- insbesondere wenigstens an den Y-Zentrierelementen (60) und den Greifhaken (58) am unteren Ende eine Einführschräge ausgebildet ist.

9. Greifeinrichtung nach einem der vorhergehenden Vorrichtungsansprüche,
**dadurch gekennzeichnet**, **daß**
die Greifeinrichtung (51) bzw. deren Dreheinheit (62) in Z-Richtung verlagerbar ist, indem sie an mehreren vertikal verlaufenden, hinsichtlich ihrer Querschnitte im Winkel zueinander stehenden, Bändern (15), die insbesondere eine hohe Formstabilität in Bandebene besitzen, insbesondere aus Metallblech oder Kunststoff bestehen, hochgezogen oder abgesenkt wird, indem die Bänder (15) an ihrem oberen Ende synchron auf- bzw. abgewickelt, insbesondere an einem in X-und Y-Richtung verfahrbaren Wagen abgewickelt, werden.

10. Greifeinrichtung nach einem der vorhergehenden Vorrichtungsansprüche,
**dadurch gekennzeichnet**, **daß**
die X-Zentrierelemente (61) und/oder die Y-Zentrierelemente (60) paarweise ausgebildet und in ihrem Abstand gegenüber dem Greifgrundkörper (57) der Greifeinrichtung (51) jeweils synchron verstellbar sind mittels eines Antriebes (1, 2) zur Anlage an den Seitenwänden der Behälter.

11. Greifeinrichtung nach einem der vorhergehenden Vorrichtungsansprüche,
**dadurch gekennzeichnet**, **daß**
die Greifhaken (57) und ein Paar von Zentrierelementen, insbesondere die X-Zentrierelemente, auf jeder der zwei gegenüberliegenden Seiten der Greifeinrichtung so miteinander wirkverbunden sind, daß mittels des gleichen Antriebes (1)
- zunächst die Zentrierelemente, insbesondere die X-Zentrierelemente (61) bis zur Anlage an die Seitenwände (52, 53) des Behälters gebracht und
- durch weiteres Antreiben die Greifhaken (58) bezüglich des Grundkörpers (67) der Greifeinrichtung (51), insbesondere bezüglich deren Niederhalter (59) oder (59') angehoben werden, und die Wirkverbindung zwischen den Greifhaken (58) und den X-Zentrierelernenten (61) insbesondere durch ein Schubkeilgetriebe, insbesondere ein zweistufiges oder dreistufiges Schubkeilgetriebe, realisiert ist.
(Theorie)

12. Greifeinrichtung nach einem der vorhergehenden Vorrichtungsansprüche,
**dadurch gekennzeichnet**, **daß**
- auf zwei einander gegenüberliegenden Seiten jeweils die Niederhalter (59') und das X-Zentrierelement einstückig miteinander ausgebildet sind, indem von dem Niederhalter (59') Führungsstäbe vertikal nach unten als X-Zentrierelemente (61) abragen und
- daß der wenigstens eine Greifhaken (58) mit seinem Greifvorsprung (57) gegenüber dem Niederhalter (59') um eine horizontal in Y-Richtung verlaufende Achse verschwenkbar ist.
*(Fig. 1-3:)*

13. Greifeinrichtung nach einem der vorhergehenden Vorrichtungsansprüche,
**dadurch gekennzeichnet**, **daß**
die Greifhaken (58) gleichzeitig als X-Zentrierelement dienen und der Niederhalter die Grundplatte (14) der Greifeinrichtung (51) ist und insbesondere die Greifvorsprünge der Greifhaken nur in Z-Richtung bezüglich der Greifeinrichtung (51) beweglich und antreibbar sind.

14. Greifeinrichtung nach einem der vorhergehenden Vorrichtungsansprüche,
**dadurch gekennzeichnet**, **daß**
durch einen einzelnen oder gekoppelten, linearen Antrieb (1 und/oder 2, z. B. vorgespannte Spiralfedern (1), Pneumatik-, Hydraulikzylinder, Linearmotor, Spindelantrieb) über mechanische Koppelglieder (5) (z. B. Schere, Mitnehmer, Schubkeile) zwischen den Greif- (4, 7 ,8) und Zentriereinrichtungen (6, 11, 12, 13) eine adaptive, zentrierte Greiferendlage, in automatischer Anpassung an die Abmessungen des zu transportierenden Behälters, realisiert wird.
